# EUROPEAN PATENT SPECIFICATION

(11) **EP 0 600 635 B1**
(45) Date of publication and mention of the grant of the patent: **14.05.1997**
(21) Application number: 93309161.3
(22) Date of filing: 17.11.1993
(51) Int. Cl.: H02M 7/48

(54) **Parallel-connection multiple inverter system and control method therefor**
Mehrfachwechselrichtersystem mit parallel-geschalteten Einheiten und Steuerverfahren dafür
Système onduleur multiple en connexion parallèle et méthode de contrôle pour celui-ci

(30) Priority: 30.11.1992 JP 319705/92
(43) Date of publication of application: 08.06.1994
(73) Proprietor: HITACHI, LTD., Chiyoda-ku, Tokyo 101 (JP)
(72) Inventor: Ikimi, Takashi, Katsuta-shi, Ibaraki 312 (JP); Okuyama, Toshiaiki, Naka-gun, Ibaraki 319-11 (JP); Tobise, Masahiro, Katsuta-shi, Ibaraki 312 (JP); Takahashi, Junichi, Katsuta-shi, Ibaraki 312 (JP)
(74) Representative: Calderbank, Thomas Roger

(56) References cited:
- EP-A- 0 244 186
- DE-A- 4 111 733
- US-A- 5 142 468
- PATENT ABSTRACTS OF JAPAN vol. 9, no. 251 (E-348) 8 October 1985 & JP-A-60 098 875 (YASUKAWA DENKI SEISAKUSHO K.K.) 1 June 1985

## Description

The present invention relates to an inverter system for use in a variable-speed AC motor control system, an uninterruptible ac electric power supply and the like, and more particularly it relates to a multiple inverter system having voltage source PWM inverters connected in parallel and performing pulse-width modulation control on its output voltage. It also relates to a control method for the system.

A parallel and multiple connection of voltage source PWM inverters is already known and has contributed to the down-sizing in capacity of a unit inverter and to the harmonic reduction thereof thereby ensuring reduction of distortion in the output voltage even at a lower switching frequency. As a PWM control method useful for controlling the inverter output voltage, there is known such a prior art as set forth in the Japanese Patent Application Laid-open No.60-98875/1985. Namely, in a multiple-connection inverter system including an interphase reactor provided between respective corresponding output terminals of two inverter units, a phase angle of respective carrier waves for controlling a respective inverter is adapted to become negative-phase from each other with a phase shift of 180 degrees, and the respective inverter is controlled of its output voltage with a PWM signal to be obtained as a result of comparison between these respective carrier waves and a voltage command signal.

Through such arrangements, since an output current to be obtained from the center tap of the interphase reactor becomes approximately twice as large as a current of each respective inverter, it becomes possible to drive an AC motor having a capacity twice as large as a unit capacity of each inverter. Further, by adding a different control signal to the first inverter and the second inverter respectively, it becomes possible to reduce a waveform distortion such as harmonics in a synthetic voltage in comparison with that of a single inverter.

In the parallel-connection multiple inverter system according to the invention, by ensuring the phase angle of the carrier wave signals to change in accordance with the change in polarity of the voltage command signal of the individual line phase, the pulse phases in the synthetic output voltages can be adjusted to become almost the same throughout the whole phases. Thereby, it is possible to minimize distortion in the output voltage of the multiple inverter system, and in particular, to eliminate the harmonic component which is two times the carrier frequency without increasing switching frequency in the inverter system.

Thereby, the following advantageous effects according to the invention may be realized. The loss occurring in the inverter system and the load such as motors are ensured to be minimized, thereby contributing to improvement in efficiency and down-sizing of the inverter system and the like. Further, thusly reduced distortion in the output voltage advantageously reduces noise and vibration.

The above-mentioned prior art, however, involved such a problem due to a cause to be described later that in the synthetic output voltage obtained by synthesizing outputs from respective inverters, a harmonic component in double frequency of a carrier wave becomes particularly large. Some countermeasures such as to increase the number of frequency of the carrier wave or the like may be contemplated to be taken in order to reduce an amplitude of this harmonic component relative to a fundamental wave, which, however, results in another problem that the switching loss in the inverter increases thereby lowering its conversion efficiency.

The main object of the present invention is to reduce harmonics in the output voltage from the parallel-connection multiple inverter without increasing the number of a switching frequency.

A method according to the invention is disclosed in claim 1. A system according to the invention is disclosed in claim 3. The prior art document US-A- 5142468 discloses the features of the preamble of the independent claims.

The object of the invention is at least in part accomplished by utilizing a parallel-connection multiple inverter system having: at least two inverter units for converting a DC voltage to an AC voltage, and generating a synthetic output voltage to be output by synthesizing AC voltages from said at least two inverter units; controlling output voltages from the above-mentioned at least two inverter units in response to a pulse width modulation signal to be obtained as a result of comparison between an AC voltage command which serves as a reference value for an output voltage of a respective line phase and two carrier waves which have a phase difference of 180 degrees each other, further in conjunction with a control method for controlling a parallel-connection multiple inverter whereby every time the polarity of said AC voltage command in respective line phases changes, more specifically at every 180 degrees of phase, the phase angle of a respective carrier wave in the corresponding line phase is caused to change. This phase angle change in the carrier waves is advantageously effected to be performed such that, in particular, when the polarity of said AC voltage command is in the same polarity with that of an associated AC voltage command in a corresponding relative phase, the corresponding phase angle of the carrier waves in the corresponding line phases are adapted to become in-phase or in negative-phase one another, and further when the respective polarity of said AC voltage commands in the corresponding line phases is in the opposite polarity from each other, the corresponding phase angle of the carrier waves in said corresponding respective line phases is changed to have a phase difference of approximately 90 degrees.

Further, the above-mentioned main object of the invention is at least in part accomplished by providing: a parallel-connection multiple inverter system having: two inverter units each for converting a DC voltage into an AC voltage; a means for synthesizing AC voltages from said respective inverter units to obtain an output voltage; a means for generating a respective voltage command signal serving as a reference value for said output voltage of individual line phase; a means for generating a first carrier wave signal with a predetermined cycle; a means for generating a pulse width modulation signal for an individual line phase in response to said first carrier wave signal and said respective voltage command signal for said individual line phase; a first control means for controlling an output voltage from said first inverter unit responsive to said pulse width modulation signal; a means for generating a second carrier wave having a negative-phase relative to that of said first carrier wave signal; a means for outputting a pulse width modulation signal for an individual line phase in response to said second carrier wave signal and said voltage command signal for said individual line phase; and a second control means for controlling an output voltage from said second inverter unit responsive to said pulse width modulation signal, wherein
the parallel-connection multiple inverter system is characterized by comprising: a polarity detection means for detecting a polarity of said AC voltage command of said individual line phase; and a means for variably changing the phase angle or frequency of said first and second carrier waves for individual line phases in response to a polarity detection value from said polarity detection means.

When observing an output voltage from a parallel-connection multiple inverter system in views of respective line phases, in a particular region where, for example, both a U-phase voltage command and a V-phase voltage command are either in a positive polarity or negative polarity, since pulse phases of a U-phase synthetic output voltage and a V-phase synthetic output voltage have an in-phase relationship likewise in the prior art, pulse components are cancelled out in a resultant U-V line-toline voltage.

Further, in a region where an opposite polarity is caused to occur between two phase voltage commands such that a U-phase voltage command is of positive polarity while a V-phase voltage command is of negative polarity, by changing the phase angle of a carrier wave by 90 degrees in a respective line phase in accordance with the polarity of an AC voltage command in the respective line phase, the pulse phase of a synthetic output voltage is effected to change 180 degrees, thus ensuring a pulse phase relationship between the respective synthetic output voltages to become in-phase in this opposite polarity region, thus cancelling out pulse components therebetween. Thereby, it is possible according to the invention to reduce the harmonic component of the line-to-line voltage which is two times the carrier frequency.

Incidently, since the pulse phase relationship between the U-phase synthetic output voltage and the V-phase synthetic output voltage becomes negative-phase according to the prior art, a pulse component in a U-V line-to-line voltage is amplified twice as large. Since a pulse frequency of the U-phase synthetic output voltage and the V-phase synthetic output voltage equals a two-fold of the carrier frequency, it occurs that the harmonic component of the line-to-line voltage which is two times the carrier frequency becomes particularly large.

These and other objects, aspects and embodiments of the present invention will be described in more detail with reference to the accompanying drawings, in which:
Fig.1 is an operational waveform diagram of an inverter of one embodiment of the invention;
Fig.2 is a main circuit configuration of the inverter of one embodiment of the invention;
Fig.3 is a control circuit block diagram of the inverter of one embodiment of the invention;
Fig.4 is an operational waveform of a triangular pulse generator according to the invention;
Fig.5 is an operational waveform diagram indicative of operation of an prior art parallel-connection multiple inverter;
Fig.6 compares harmonic amplitudes in line-to-line voltages between the present invention and the prior art;
Fig.7 is an operational waveform indicative of operation of a triangular pulse generator of a second embodiment of the invention; and
Fig.8 is an operational waveform diagram indicative of operation of an inverter of the second embodiment of the invention.

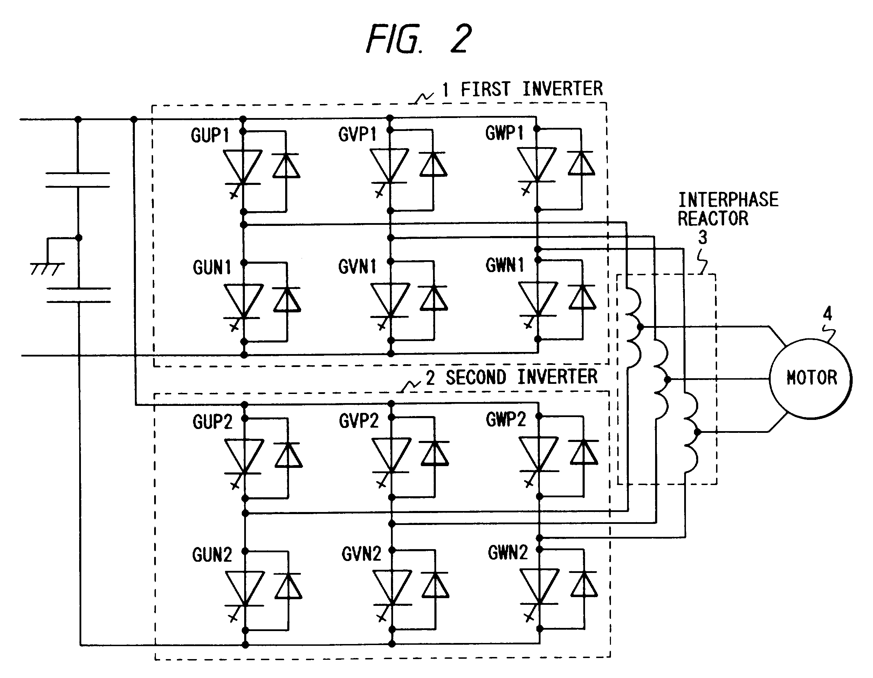

With reference to Figure 2, a one preferred embodiment of the invention will be set forth in the following.

Figure 2 is a schematic block diagram illustrating a main circuit configuration of a parallel-connection multiple inverter according to the invention. Fig. 2 shows a parallel-connection arrangement of a first three-phase inverter 1 including switching elements GUP1, GUN1, GVP1, GVN1, GWP1, GWN1, and a second three-phase inverter 2 including switching elements GUP2, GUN2, GVP2, GVN2, GWP2, GWN2, in which an input side of a respective inverter is connected to a DC voltage source in common-use, and output terminals of the respective inverters of the same phase are interconnected in an interphase reactor 3 respectively for respective line phases. An output terminal connected to a respective center tap of the respective interphase reactor 3 supplies synthetic voltages obtained to an electric motor 4.

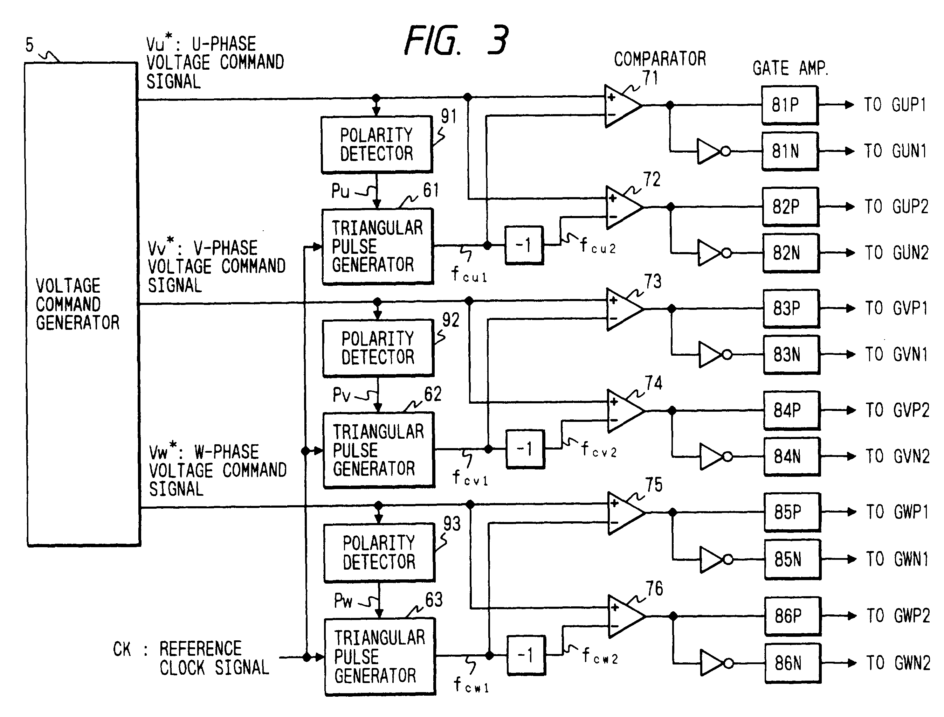

Figure 3 shows a schematic block diagram illustrating a control circuit of the above-mentioned parallel-connection multiple inverter system embodying the invention. In reference to Fig.3, numerals 5 denotes a voltage command generator for generating voltage command signals Vu∗ to Vw∗ for respective U, V, and W phases. 91 to 93 denote a polarity detector for detecting polarity of a respective voltage command signal of a respective line phase then outputting voltage command polarity signals Pu to Pw in accordance. 61 to 63 denote a triangular pulse generator for generating a pulse width modulation carrier wave for respective line phases, the triangular pulse generator being provided with a function to change the phase angle of carrier waves in accordance with the change in the voltage command polarity signals Pu through Pw. Output signals fcu₁, fcv₁, fcw₁ from triangular pulse generators 61 through 63 are defined respectively as a first carrier signal for a corresponding line phase, and their reversed signals fcu₂, fcv₂, fcw₂ are defined respectively as a second carrier signal for the corresponding line phase. 71 through 76 denote comparators for comparing between the voltage command signal of a respective line phase and the associated first and second carrier wave signals thereof thereby to output a pulse width modulation signal therefrom. 81P through 86P, and 81N through 86N are gate amplifiers for amplifying the thusly obtained pulse width modulation signals to be converted into drive signals for driving respective switching elements in the first and the second inverters.

A major difference in the above-mentioned control circuit of the invention distinct from the prior art resides in a novel method for generating a carrier wave as an output signal from the triangular pulse generators 61 through 63. Namely, the carrier waves in the prior art are all in-phase for respective line phases independent of the polarity of the voltage command signal thereof. In contrast, a phase angle of a respective carrier wave of a respective line phase according to the invention is adapted to change in accordance with the change in the polarity of a voltage command signal of the respective line phase.

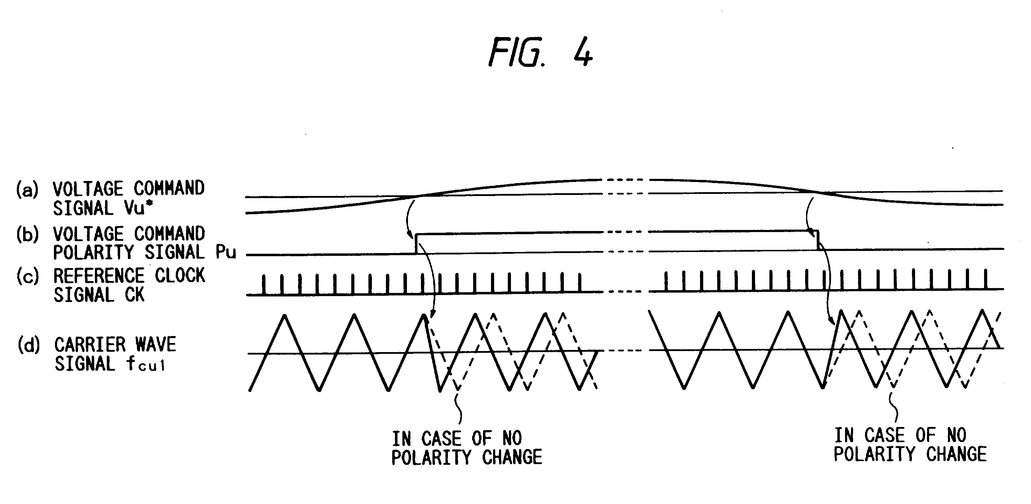

Figure 4 is a schematic diagram illustrating operation of the triangular wave generator 61. The other triangular wave generators 62, 63 are assumed also to operate likewise. In reference to Fig. 4, (a) denotes a U-phase voltage command signal Vu*, (b) a voltage command polarity signal Pu which is an output from the polarity detector 91, (c) a reference clock signal Ck, and (d) a first carrier wave signal fcu₁ which is an output from the triangular wave generator 61, respectively. The polarity detector 91 enters a U-phase voltage command signal Vu* to be converted into a voltage command polarity signal Pu indicative of the change in the polarity thereof. The triangular pulse generator 61 outputs a carrier wave signal fcu₁, of a triangular wave having a maximum or a minimum peak for every two pulses of the reference clock signal Ck when the voltage command polarity signal Pu is constant, whereas, when the voltage command polarity signal Pu changes, it outputs a carrier wave signal fcu₁ in which during a half cycle between a peak-to-peak interval immediately following the occurrence of a polarity change, a triangular pulse is generated such that its peak coincides with one pulse interval of the reference clock signal Ck instead of two pulses at normal coincidence. As a results, the cycle period of the carrier wave signal fcu₁ immediately following the event of the polarity change is multiplied by 0.5 only during a half period thereof. Thereby, the carrier wave signal fcu₁ after the polarity change in the voltage command signal Vu* as shown in a solid line is caused to advance 90 degrees in phase in comparison with triangular waves indicated in dotted lines assuming no polarity change.

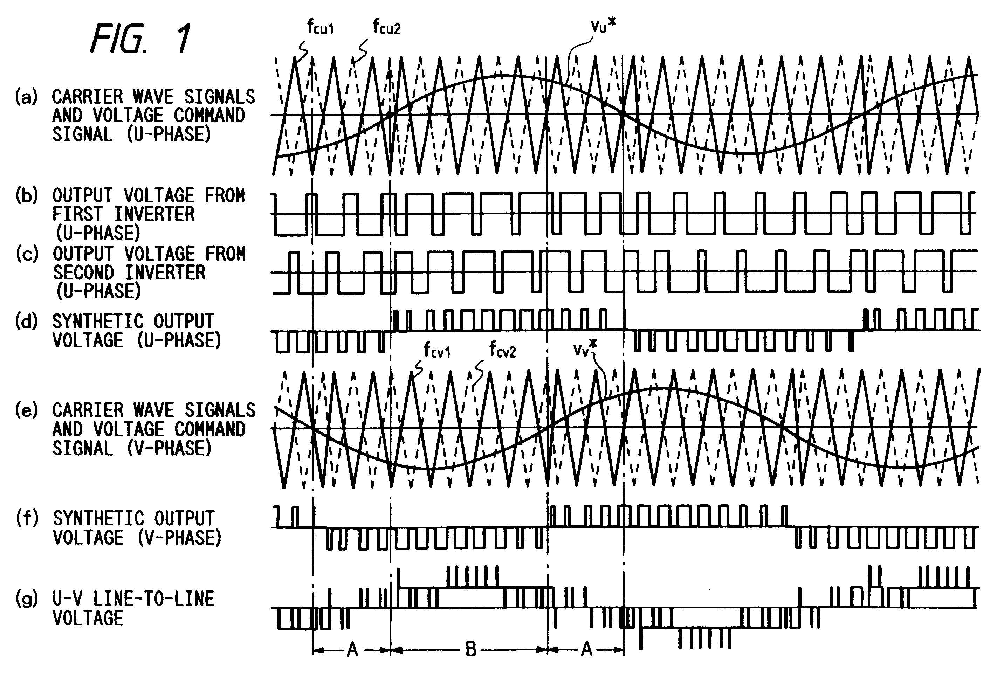

Fig. 1 shows exemplary operational waveforms in a multiple inverter system utilizing a control circuit of Fig. 3 embodying the invention. In Fig.1, (a) illustrates the first and the second carrier wave signals fcu₁, fcu₂ and the voltage command signal Vu* each on the U-phase. It can be understood from this illustration that immediately after the polarity of the voltage command signal changes from positive to negative or vice versa, a particular cycle of the respective carrier wave signal, more particularly, during its half cycle immediately thereafter becomes 0.5 times of the normal, thereby effecting a phase angle change to take place in the carrier wave signal. In the likewise drawing, (b) illustrates a U-phase output voltage from the first inverter, obtained through pulse width modulation in comparison with the first carrier wave signal and the U-phase voltage command signal. Likewise, (c) illustrates a U-phase output voltage from the second inverter, obtained through pulse width modulation in comparison with the second carrier wave signal and the U-phase voltage command signal. (d) shows a U-phase synthetic output voltage obtained as an average of the first and the second output voltages. (e) shows a first and a second carrier wave signals fcv₁, fcv₂, and a voltage command signal Vv* on a V-phase. It can be understood, likewise the U-phase, that during a half cycle of the carrier wave signal immediately following the change of the polarity of the voltage command signal from positive to negative or vice versa, the cycle period thereof is multiplied by 0.5, thereby causing a phase angle change to take place in the carrier wave signal. (f) shows a V-phase synthetic output voltage obtained likewise (d). (g) shows a waveform of a U-V line-to-line voltage obtained as a difference between (d) and (f).

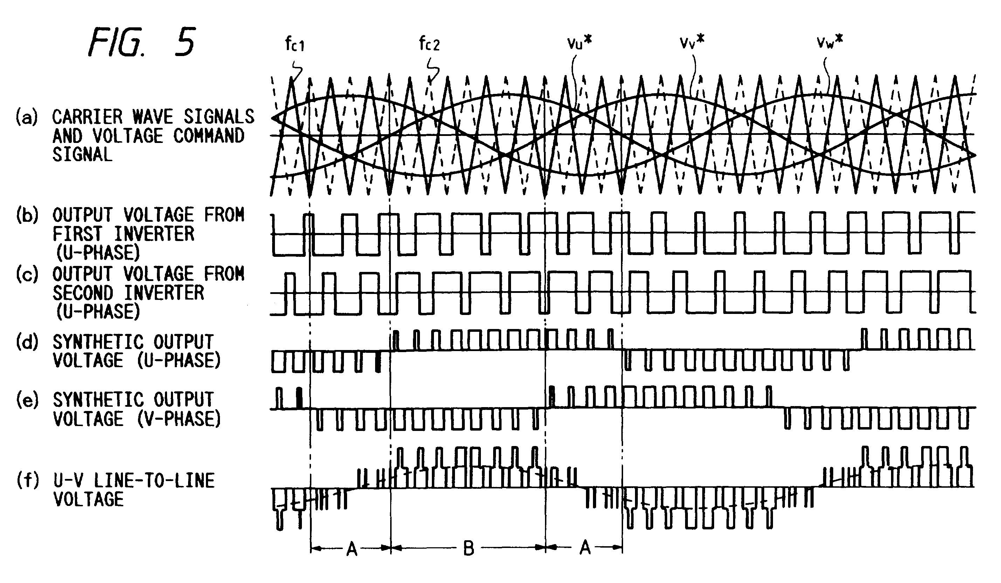

In order to compare the advantages and effects of the present invention over the prior art, a likewise operational waveform diagram as shown in Fig.1 is given in Fig. 5 indicative of the prior art. In Fig.5, (a) shows a first and a second carrier wave signals fc₁, fc₂, and voltage command signals Vu*, Vv*, Vw* for respective line phases of U, V, and W. The first and the second carrier wave signals are common to respective voltage command signals of respective line phases. Any phase angle of the carrier waves is not caused to change in accordance with the change in polarity of the voltage command as has been changed and indicated in the solid line in Fig.4, but holds on a constant cycle as shown in dotted lines therein. (b) is a U-phase output voltage from the first inverter obtained through pulse width modulation by comparison between the first carrier wave signal and the U-phase voltage command signal. (c) is a U-phase output voltage from the second inverter obtained through pulse width modulation by comparison between the second carrier wave signal and the U-phase voltage command signal. (d) is a U-phase synthetic output voltage obtained as an average of the first and the second output voltages. (e) is a V-phase synthetic output voltage obtained likewise. (f) is a U-V line-to-line voltage waveform obtained as a difference between (d) and (e).

In comparison of the operational waveforms in Fig.1 and Fig.5, we can note a significant difference in each of the line-to-line voltage waveforms. First, with reference to Fig.5 indicative of the prior art, since the same carrier wave signals are used in common for a respective line phase, when the U-phase voltage command and the V-phase voltage command are both positive polarity or negative polarity as shown in a region indicated by A, the pulse phase of the U-phase synthetic output voltage and the pulse phase of the V-phase synthetic output voltage having an in-phase relationship, pulse components in the respective pulse phase are effected to be cancelled out in a resultant U-V line-to-line voltage. However, when the U-phase voltage command is positive polarity and the V-phase voltage command is negative polarity as shown in a region indicated by B, the pulse phase of the U-phase synthetic output voltage and the pulse phase of the V-phase synthetic output voltage having an opposite polarity relationship, the pulse components in the respective pulse phases are amplified twice as great in the U-V line-toline voltage. Further, since the pulse frequencies of the U-phase synthetic output voltage and the V-phase synthetic output voltage equal twice the carrier wave frequency, there occurs particularly a large harmonic as great as twice the carrier wave frequency in the line-to-line voltage.

Next, with reference to Fig.1 illustrative of the present invention, in a region as indicated by A where both the U-phase voltage command and the V-phase voltage command are either in a positive polarity or negative polarity, since corresponding phase angles of the respective carrier wave signal of the U-phase and the V-phase become in-phase each other likewise in Fig.5 indicative of the prior art except for a half cycle immediately following the occurrence of a polarity change in the voltage command, and thereby since the pulse phases of the U-phase synthetic output voltage and the V-phase synthetic output voltage have an in-phase relationship, the resultant pulse components are cancelled out in the U-V line-to-line voltage. Further, also in a region as indicated by B where the U-phase voltage command is, for example, positive polarity and the V-phase voltage command is negative polarity, since a phase angle change of 90 degrees caused in a carrier wave in the respective line phase undergoing a polarity change will result in a pulse phase change of 180 degrees in its synthetic output voltage, thereby a pulse phase relationship between the corresponding synthetic output voltages even in this region being advantageously effected to become in-phase, the resultant pulse components are cancelled out. Thereby, the harmonic component of the line-to-line voltage which is two times the carrier frequency can be cancelled out. The advantageous effect of the invention over the prior art is obvious from the comparison of the operational waveforms at the line-to-line voltages, where the U-V line-to-line voltage obtained according to the invention consists of only a voltage pulse having a level approximately equal to an average voltage indicated in dotted lines, and thus having a reduced voltage distortion.

Further, with reference to Fig.1, although it has been described that in the region indicated by A where both the U-phase voltage command and the V-phase voltage command are either positive polarity or negative polarity, the respective phase angles of the corresponding carrier waves of the respective line phases are assumed to be in-phase, but not limited thereto, it should be construed that they may be in an opposite polarity as well. It is because that the phase angles of the synthetic output voltages of respective line phases are simply shifted 180 degrees as a whole, and which causes no change in the in-phase relationship between the pulse phases of the synthetic output voltages of respective line phases.

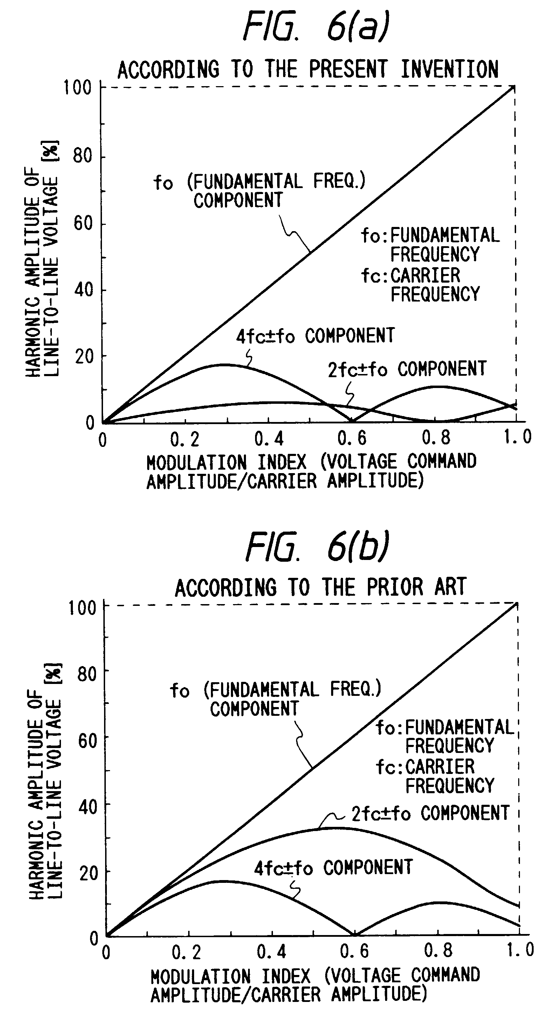

With reference to Figure 6, there are compared harmonic amplitudes of the line-to-line voltage between (a) indicative of one embodiment of the invention and (b) indicative of the prior art. In Fig.6, f₀ denotes the frequency of a voltage command signal, and f_{c} denotes the frequency of a carrier wave. By applying the present invention, such a component of those harmonics of the line-to-line voltage, in particular, as a component 2fc±f₀ present in the vicinity of a double frequency of the carrier frequency is effected to be reduced remarkably, thereby minimizing the voltage distortion.

The principle of the present invention will be set forth in brief as follows. In view of the problems associated with the prior art that when the polarities of the voltage commands of corresponding respective line phases become opposite as observed between line-to-line as indicated by the B region in Fig.5, the pulse phases of the synthetic output voltages of respective line phases become opposite polarity as shown by (d) and (e), thereby the double frequency component twice the carrier frequency becomes very large in the line-to-line voltage, the present invention is contemplated to sufficiently reduce the harmonic component of the line-to-line voltage which is two times the carrier frequency through the steps of changing either one of the corresponding pulse phases by 180 degrees such that both the pulse phases of synthetic output voltages of respective line phases are always kept in-phase.

Hence, in order to cause a pulse phase change of 180 degrees in one of the synthetic output voltage, the pulse frequency of the synthetic output voltages being two times the carrier frequency, it will be readily understood that the phase angle of one of the corresponding carrier waves may be effected either to advance or lag 90 degrees from the other. In the first embodiment of the invention, the phase angle of the carrier wave was advanced 90 degrees so that the pulse phase was effected to change 180 degrees.

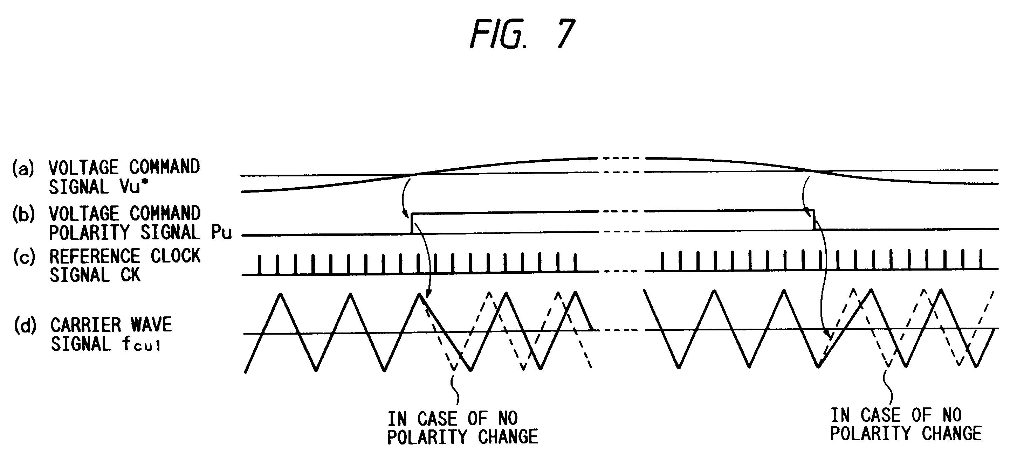

By contrast, Figure 7 shows another operational waveform output from a triangular wave generator where the phase angle of the carrier wave is lagged 90 degrees to the same effect as above. In Figure 7, (a) denotes a voltage command signal, (b) a voltage command polarity signal output from a polarity detector, (c) a reference clock signal, and (d) a carrier wave signal output from the triangular wave generator.

The operation of this exemplary case of the invention will be described below. A voltage command polarity signal from a polarity detector 91 is entered into a triangular pulse generator 61A from which is output a carrier wave signal in a triangular waveform having a maximum or minimum peak thereof for every two pulses of the reference clock signal when the voltage command polarity signal is constant, whereas when the voltage command polarity signal undergoes a change, a carrier wave signal is output in a triangular waveform having a pulse width equal to 3 pulse intervals of the reference clock signal only during a half cycle to be defined between a peak-to-peak cycle thereof immediately following the polarity change in the voltage command polarity signal. Consequently, the carrier wave signal immediately after the occurrence of polarity change in the voltage command signal is caused to change its cycle period by being multiplied by 1.5 only during a half cycle thereof, thereby the carrier wave signal after the occurrence of the polarity change in the voltage command signal is effected to lag 90 degrees in phase than triangular waveforms shown in dotted lines in which no polarity change is assumed to have occurred.

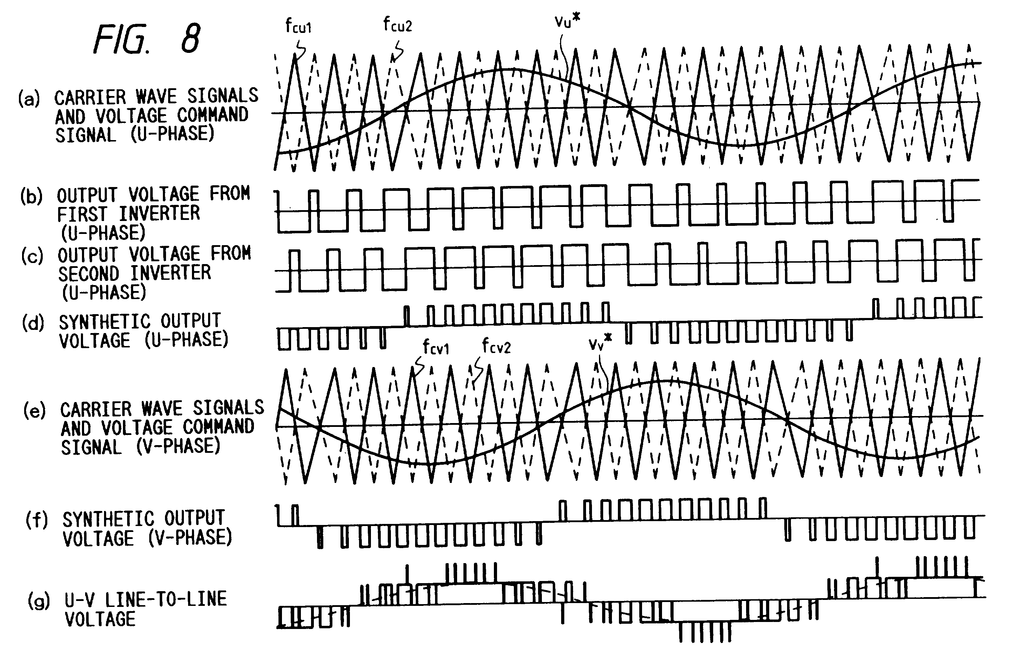

With reference to Figure 8, there is shown an operational waveform diagram of a parallel-connection multiple inverter system of a second preferred embodiment of the invention. Signals of (a) through (g) are the same as in Fig.1. In particular, as can be recognized both in (a) and (e), immediately after the polarity of a voltage command signal in a respective line phase changes from positive polarity to negative polarity and vice versa, the pulse phase of a first and a second carrier wave signals during a half period thereof is multiplied by 1.5, thus causing a phase angle shift in the carrier wave signal in accordance. Thereby, in a region where a U-phase voltage command is positive polarity and a V-phase voltage command is negative polarity, namely when both voltage commands are in an opposite polarity relationship, since a phase angle lag of 90 degrees caused in the carrier wave on a respective line phase undergoing a polarity change will result in a pulse phase change of 180 degrees in the synthetic output voltage, thereby ensuring an in-phase pulse phase relationship to be realized between respective synthetic output voltages even in this region, resultant harmonic pulse components are effectively cancelled out therebetween. Thereby, according to this second embodiment of the invention likewise in the aforementioned first embodiment of the invention, the harmonic component of the line-to-line voltage which is two times the carrier frequency can be advantageously reduced as well.

In the preferred embodiments of the invention described heretofore, the changing in phase in the first and the second carrier waves is effected to take place by means of the polarity detection signal, but not limited thereto, it should be construed that the same effect can be accomplished by means of a phase angle detection signal indicative of a particular phase of the voltage command signal as well.

Further, in the foregoing preferred embodiments of the invention, the interphase reactor by way of example is utilized to constitute the main circuit configuration of the parallel-connection multiple inverter system of the invention so as to synthesize AC voltages supplied from two inverter units to obtain an output voltage. It is not limited thereto, but it should be construed that the same effect of the invention can be obtained by utilizing a transformer means for interconnecting multiple inverters.

Still further, as an exemplary object for applying the control method according to the invention we have dealt with the inverters which convert a direct current into an alternating current to supply an electric power to a load, but it is not limited thereto, and it should be understood that the advantage and effect of the invention can be applied to a line-side converter which converts an alternating current into a direct current.

Moreover, in the description heretofore, for easier understanding and simplification of description, the arrangement and operation of the pulse width modulation circuit have been described by way of example of the analog circuits and analog waveforms, but not limited thereto, it should be construed that the same effect and advantage of the invention can be accomplished by employing a microprocessor or the like so as to digitalize information and operate on a pertinent software.

## Claims

1. A control method for controlling a parallel-connection multiple inverter system comprising at least two inverter units for converting a direct current(DC) voltage into an alternating current(AC) voltage, said parallel-connection multiple inverter system being adapted to output a synthetic output voltage by synthesizing AC voltages from respective inverter units,
wherein said control method controls a respective output voltage from the at least two inverter units on the basis of a pulse width modulation (PWM) signal to be obtained from comparison between an AC voltage command serving as a reference value for an output voltage of an individual line phase and two carrier waves of the individual line phase, said carrier waves having a phase difference of 180 degrees from each other, said control method is characterized in that
a respective phase angle of carrier waves in a corresponding individual line phase is changed, every time a polarity of said AC voltage command of said individual line phase is caused to change (at every 180 degrees of cyclic period), relative to a preceding phase angle of the carrier waves prior to the occurrence of the change in polarity of said AC voltage command.

2. A control method for controlling a parallel-connection multiple inverter system according to claim 1 wherein
a respective phase angle of carrier waves in the corresponding individual line phase is characterized by being adapted to become either in-phase or negative-phase relative to that of carrier waves in the other one of the corresponding individual line phase when polarity of said AC voltage commands of corresponding line phases is in the same polarity, and further to have a phase difference of approximately 90 degrees between said corresponding carrier waves between said corresponding individual line phases when polarity of said AC voltage commands of corresponding line phases is in opposite polarity.

3. A parallel-connection multiple inverter system having: two inverter units each for converting a DC voltage into an AC voltage; a means for synthesizing AC voltages from said respective inverter units to obtain an output voltage; a means for generating a respective voltage command signal serving as a reference value for said output voltage of individual line phase; a means for generating a first carrier wave signal with a predetermined cycle; a means for generating a pulse width modulation signal for an individual line phase in response to said first carrier wave signal and said respective voltage command signal for said individual line phase; a first control means for controlling an output voltage from said first inverter unit responsive to said pulse width modulation signal; a means for generating a second carrier wave having a negative-phase relative to that of said first carrier wave signal; a means for outputting a pulse width modulation signal for an individual line phase in response to said second carrier wave signal and said voltage command signal for said individual line phase; and a second control means for controlling an output voltage from said second inverter unit responsive to said pulse width modulation signal, wherein
the parallel-connection multiple inverter system is characterized by comprising: a polarity detection means for detecting a polarity of said AC voltage command of said individual line phase; and a means for variably changing the phase angle of said first and second carrier waves for individual line phases in response to a polarity detection value from said polarity detection means.

4. A parallel-connection multiple inverter system according to claim 3 wherein at the time when said voltage command changes its polarity, a corresponding respective phase angle of said first and second carrier waves in corresponding line phases is characterized by being adapted either to advance or lag by 90 degrees in cyclic period.

5. A parallel-connection multiple inverter system according to claim 3 wherein when said voltage command changes its polarity, a corresponding cycle period of said first and second carrier waves in corresponding individual line phases is characterized by being multiplied either by 0.5 or 1.5 during a half cycle of said corresponding carrier waves.

6. A variable speed AC drive system having an alternating current motor and a parallel-connection multiple inverter system according to any one of claims 3 to 5 for driving the motor.

7. A method of operating variable speed AC drive system having an alternating current motor and a parallel-connection multiple inverter system, wherein the parallel-connection multiple inverter system is controlled by a method according to claim 1 or claim 2,

## Patentansprüche

1. Verfahren zur Steuerung eines Mehrfach-Wechselrichtersystems in Parallelschaltung mit mindestens zwei Wechselrichtereinheiten zur Umwandlung einer Gleichspannung (DC) in eine Wechselspannung (AC), wobei das Mehrfach-Wechselrichtersystem in Parallelschaltung dazu eingerichtet ist, durch Generierung von Wechselspannungen von jeweiligen Wechselrichtereinheiten eine generierte Ausgangsspannung auszugeben,
wobei das Verfahren eine jeweilige Ausgangsspannung von mindestens zwei Wechselrichtereinheiten auf der Grundlage eines Pulsbreiten-Modulationssignals (PWM) steuert, das aus einem Vergleich zwischen einer Soll-Wechselspannung, die als Referenzwert für eine Ausgangsspannung einer einzelnen Leitungsphase dient, und zweier Trägerwellen der einzelnen Leitungsphase, die gegeneinander eine Phasendifferenz von 180° aufweisen, zu gewinnen ist,
dadurch **gekennzeichnet**, daß
ein jeweiliger Phasenwinkel von Trägerwellen in einer entsprechenden einzelnen Leitungsphase jedesmal, wenn eine Änderung der Polarität der Soll-Wechselspannung der einzelnen Leitungsphase bewirkt wird (alle 180° einer Zyklusperiode), bezüglich des vorhergehenden Phasenwinkels der Trägerwellen, vor dem Auftreten der Polaritätsänderung der Soll-Wechselspannung, geändert wird.

2. Verfahren nach Anspruch 1, wobei ein jeweiliger Phasenwinkel von Trägerwellen in der entsprechenden einzelnen Leitungsphase dadurch gekennzeichnet ist, daß er entweder in Phase oder in eine negative Phasenbeziehung zu demjenigen von Trägerwellen in der anderen der entsprechenden einzelnen Leitungsphase gelangt, wenn die Polarität der Soll-Wechselspannungen entsprechender Leitungsphasen die gleiche Polarität aufweist, und weiterhin eine Phasendifferenz von etwa 90° zwischen den entsprechenden Trägerwellen zwischen den entsprechenden einzelnen Leitungsphasen aufweist, wenn die Polarität der Soll-Wechselspannungen entsprechender Leitungsphasen eine entgegengesetzte Polarität aufweist.

3. Mehrfach-Wechselrichtersystem in Parallelschaltung, aufweisend:
zwei jeweils zur Umwandlung einer Gleichspannung in eine Wechselspannung vorgesehene Wechselrichtereinheiten; eine Einrichtung zur Generierung von Wechselspannungen von den jeweiligen Wechselrichtereinheiten, um eine Ausgangsspannung zu erhalten; eine Einrichtung zur Erzeugung eines als Referenzwert für die Ausgangsspannung einer einzelnen Leitungsphase dienenden entsprechenden Sollspannungssignals; eine Einrichtung zur Erzeugung eines ersten Trägerwellensignals mit vorbestimmtem Zyklus; eine Einrichtung zur Erzeugung eines Pulsbreiten-Modulationssignals für eine einzelne Leitungsphase aufgrund des ersten Trägerwellensignals und des entsprechenden Sollspannungssignals für die einzelne Leitungsphase; eine erste Steuereinrichtung zur Steuerung einer Ausgangsspannung der ersten Wechselrichtereinheit aufgrund des Pulsbreiten-Modulationssignals; eine Einrichtung zur Erzeugung einer zweiten Trägerwelle mit einer zu dem ersten Trägerwellensignal negativen Phase; eine Einrichtung zur Ausgabe eines Pulsbreiten-Modulationssignals für eine einzelne Leitungsphase aufgrund des zweiten Trägerwellensignals und des Sollspannungssignals für die einzelne Leitungsphase; und eine zweite Steuereinrichtung zur Steuerung einer Ausgangsspannung der zweiten Wechselrichtereinheit aufgrund des Pulsbreiten-Modulationssignals, wobei
das Mehrfach-Weschselrichtersystem in Parallelschaltung durch eine Polaritätserfassungseinrichtung zur Erfassung einer Polarität der Soll-Wechselspannung der einzelnen Leitungsphase und eine Einrichtung zur variablen Änderung des Phasenwinkels der ersten und der zweiten Trägerwelle für einzelne Leitungsphasen aufgrund eines Polaritätserfassungswerts von der Polaritätserfassungseinrichtung gekennzeichnet ist.

4. System nach Anspruch 3, wobei ein jeweils entsprechender Phasenwinkel der ersten und der zweiten Trägerwelle in entsprechenden Leitungsphasen dadurch gekennzeichnet ist, daß er zu der Zeit, zu der die Sollspannung ihre Polarität ändert, entweder um 90° in einer Zyklusperiode vor- oder nachläuft.

5. System nach Anspruch 3, wobei eine entsprechende Zyklusperiode der ersten und der zweiten Trägerwelle in entsprechenden einzelnen Leitungsphasen dadurch gekennzeichnet ist, daß sie dann, wenn die Sollspannung ihre Polarität ändert, während eines Halbzyklus der entsprechenden Trägerwellen entweder mit 0,5 oder 1,5 multipliziert wird.

6. Wechselstrom-Antriebssystem variabler Geschwindigkeit mit einem Wechselstrommotor und einem Mehrfach-Wechselrichtersystem in Parallelschaltung nach einem der Ansprüche 3 bis 5 zum Antrieb des Motors.

7. Verfahren zum Betrieb eines Wechselstrom-Antriebssystems variabler Geschwindigkeit mit einem Wechselstrommotor und einem Mehrfach-Wechselrichtersystem in Parallelschaltung, das mittels eines Verfahrens nach Anspruch 1 oder 2 gesteuert wird.

## Revendications

1. Procédé de contrôle pour contrôler un système onduleurs multiples à connexions en parallèle comprenant au moins deux unités onduleurs pour convertir une tension continue (DC) en une tension alternative (AC), ledit système onduleurs multiples à connexions en parallèle étant adapté pour produire une tension de sortie synthétique en synthétisant des tensions alternatives des unités ondulaires respectives,
où ledit procédé de contrôle contrôle une tension de sortie respective d'au moins les deux unités onduleurs sur la base d'un signal de modulation par largeur d'impulsion (PWM) à obtenir à partir d'une comparaison entre une commande en tension alternative servant comme valeur de référence pour une tension de sortie d'une phase de ligne individuelle et deux ondes porteuses de la phase de ligne individuelle, lesdites ondes porteuses ayant une différence de phase de 180 degrés l'une de l'autre, ledit procédé de contrôle est caractérisé en ce que
un angle de phase respectif d'ondes porteuses dans une phase de ligne individuelle correspondante est changé, chaque fois qu'une polarité de ladite commande en tension alternative de ladite phase de ligne individuelle est amenée à changer (tous les 180 degrés de période cyclique), par rapport à un angle de phase précédant des ondes porteuses avant l'apparition du changement en polarité de ladite commande en tension alternative.

2. Procédé de contrôle pour contrôler un système onduleurs multiples à connexions en parallèle selon la revendication 1 dans lequel
un angle de phase respectif d'ondes porteuses dans la phase de ligne individuelle correspondante est caractérisé en ce qu'il est adapté pour devenir soit en phase soit de phase négative par rapport à celle des ondes porteuses dans l'autre de la phase de ligne individuelle correspondante lorsque la polarité des commandes en tension alternative précitée des phases de lignes correspondantes est de la même polarité, et pour de plus avoir une différence de phases d'approximativement 90 degrés entre lesdites ondes porteuses correspondantes entre lesdites phases de lignes individuelles correspondantes lorsque la polarité desdites commandes en tension alternative des phases de lignes correspondantes est de polarité opposée.

3. Système onduleurs multiples à connexions en parallèle ayant : deux unités onduleurs chacune pour convertir une tension continue en une tension alternative; un moyen pour synthétiser des tensions alternatives desdites unités onduleurs respectives pour obtenir une tension de sortie; un moyen pour produire un signal de commande en tension respective servant comme valeur de référence pour ladite tension de sortie de la phase de ligne individuelle; un moyen pour produire un premier signal d'onde porteuse d'un cycle prédéterminé; un moyen pour produire un signal de modulation par largeur d'impulsion pour une phase de ligne individuelle en réponse audit premier signal d'onde porteuse et ledit signal de commande en tension respective pour ladite phase de ligne individuelle; un premier moyen de contrôle pour contrôler une tension de sortie de ladite première unité onduleur en réponse audit signal de modulation à largeur d'impulsion; un moyen pour produire une seconde onde porteuse ayant une phase négative par rapport à celle dudit premier signal d'onde porteuse; un moyen pour produire un signal de modulation par largeur d'impulsion pour une phase de ligne individuelle en réponse audit second signal d'onde porteuse et ledit signal de commande en tension pour ladite phase de ligne individuelle; et un second moyen de contrôle pour contrôler une tension de sortie de ladite seconde unité onduleur en réponse audit signal de modulation par largeur d'impulsion; dans lequel
le système onduleurs multiples à connexions en parallèle est caractérisé en ce qu'il comprend : un moyen de détection de polarité pour détecter une polarité de ladite commande en tension alternative de ladite phase de ligne individuelle; et un moyen pour changer de façon variable l'angle de phase desdites première et seconde ondes porteuses pour des phases de lignes individuelles en réponse à une valeur de détection de polarité dudit moyen de détection de polarité.

4. Système onduleurs multiples à connexions en parallèle selon la revendication 4 dans lequel au moment où la commande en tension précitée change sa polarité, un angle de phase respectif correspondant des première et seconde ondes porteuses précitées dans des phases de lignes correspondantes est caractérisé comme étant adapté soit pour avancer, soit retarder de 90 degrés en période cyclique.

5. Système onduleurs multiples à connexions en parallèle selon la revendication 3 dans lequel lorsque la commande en tension précitée change sa polarité, une période de cycle correspondant des première et seconde ondes porteuses précitées dans des phases de lignes correspondantes individuelles est caractérisée comme étant multipliée soit par 0,5, soit par 1,5 pendant un cycle de moitié des ondes porteuses correspondantes précitées.

6. Système de commande alternative à vitesse variable ayant un moteur à courant alternatif et un système onduleurs multiples à connexions en parallèle selon l'une quelconque des revendications 3 à 5 pour entraîner le moteur.

7. Procédé pour faire fonctionner un système de commande alternative à vitesse variable ayant un moteur à courant alternatif et un système onduleurs multiples à connexions en parallèle, dans lequel le système onduleurs multiples à connexion en parallèle est contrôlé par un procédé selon la revendication 1 ou la revendication 2.
